Europäisches Patentamt

European Patent Office

Office européen des brevets

(19)

(11) Publication number: **0 181 751**

**A1**

(12) **EUROPEAN PATENT APPLICATION**

(21) Application number: **85307940.8**

(22) Date of filing: **01.11.85**

(51) Int. Cl.⁴: **B 01 D 39/14**
**B 01 D 46/10, F 02 M 35/024**

(30) Priority: **02.11.84 GB 8427796**

(43) Date of publication of application:
**21.05.86 Bulletin 86/21**

(84) Designated Contracting States:
**BE DE FR IT SE**

(71) Applicant: **DECLON LIMITED**
**83/84 Manton Road Earlstrees Industrial Estate**
**Corby Northants NN17 2JL(GB)**

(71) Applicant: **GUINEA PLASTICS**
**Unit 83 Barking Industrial Park Alfreds Way**
**Barking Essex 1G11 0TJ(GB)**

(72) Inventor: **Reid, James Currie**
**31 Doddington Road**
**Wilby Wellingborough Northants NN8 2VA(GB)**

(72) Inventor: **Guinea, Peter Graham**
**'Napier' Dunmow Road Hatfield Heath**
**Nr. Bishops Stortford Hertfordshire(GB)**

(74) Representative: **Cole, Paul Gilbert et al,**
**Hughes Clark Byrne & Parker 63 Lincoln's Inn Fields P.O.**
**Box 22**
**London WC2A 3JU(GB)**

(54) **Gel impregnated foam filter element.**

(57) A foam filter element comprises a plastics foam body
impregnated with a supplementary dust collection agent in
the form of a gel that is stable at elevated temperatures. The
gel is a fire-resistant organophosphorus fluid that is resistant
to increase in acid value at elevated temperatures and a
fumed silica gelling agent. The gel remains in situ on the
element even at the elevated service temperatures to which
automotive air filters are subject.

EP 0 181 751 A1

Croydon Printing Company Ltd.

## GEL IMPREGNATED FOAM FILTER ELEMENT

This invention relates to a foam filter element impregnated with a gel that acts as a supplementary dust collection agent.

It has been proposed to spray mineral oil onto foam filter elements e.g. for automotive air intake filters to act as a tackifying or supplementary dust collection agent but this gives rise to flammability problems. UK Patent Specifications Nos: 912856, 935041, 1047456, 1075376, 1149225 and 1397151 describe air intake filter elements of polyurethane or other foamed plastics materials to which mineral oil has been applied. It has also been found that the mineral oil does not remain uniformly distributed through the foam of the element under service conditions, particularly in the hot environment of an automotive air intake filter, and the loss of uniformity impairs the efficiency of the filter and can result in pools of oil collecting in the filter chamber. UK Patent Specification No. 935041 mentions the possible use of tritolyl phosphate or trixylyl phosphate which are fire retardant materials. UK Patent Specification No. 1559924 teaches that a foam can be wetted with an impingement fluid, the preferred characteristics of which depend upon the particular use to which the composite filter medium is put. The amount of impingement fluid that it recommends can be used to wet the foam can vary widely, depending upon the particular foam and the particular fluid used, but it should not be an amount such that the non-woven fibrous layer is wet. In general, the dry weight pick up of impingement fluid on the foam will be from 5 to 50 per cent, and preferably from 15 to 30 per cent. Among the useful impingement fluids mentioned are the silicone oils such as dimethyl silicones, chlorinated paraffins tris-(dinonyl-phenyl) phosphate, di-tridecyl phthalate, polyethylene glycol dibenzoates, polyphenyls, hydrogenated polyphenyls, poly (tetramethylene glycol) azealates, and aryl sulphonamides and their formaldehyde condensates, although some of these fluids will confer a combination of dust removal and fire retardant properties on the foam if initially distributed therein, their propensity to remain in the foam is no better than mineral oil and their field performance is less satisfactory than might have been predicted. UK patent specification No. 1200337 teaches the flame proofing of a curtain or panel-type filter of polyurethane foam material "in field" with a dust-catching and flameproofing composition comprising a tricresylphosphate with a chlorinated paraffin gelling additive, but we have found that when a solid chlorinated paraffin is present in an amount that is effective to produce a gel, the dust retention properties of the filter are poor. It has also been proposed in to use a fire retardant high viscosity synthetic phosphate composition in combination with a xanthan gum as thickener. But these materials do not give rise to a satisfactory filtration performance and filter life at elevated temperatures.

It is an object of the invention to provide a dust collection composition that may be impregnated into a foam plastics filter element and that has the following combination of properties;

(a) a combination of high dust retention efficiency (desirably not less than 97%) with a high capacity to hold dust;

(b) a minimal increase in pressure drop across the filter as the dust loading thereof increases so that the service life of the filter is increased;

(c) an ability to impart fire retardance to the foam preferably so that it is self-extinguishing to a match;

(d) an ability to be retained in the foam even at elevated temperatures;

(e) inertness to the foam both of the composition itself and of breakdown products thereof formed under prolonged hot service conditions (e.g. as evidenced by an ability of the treated foam to withstand oven ageing at 110°C for 14 days without serious loss of tensile strength resulting from chemical attack;

(f) the ability to be consistently applied to the foam; and

(g) cost-effectiveness.

Accordingly the invention provides a foam filter element comprising a plastics foam body impregnated with a supplementary dust collection agent in the form of a gel that is stable at elevated temperatures, wherein the gel comprises a fire-resistant organophosphorus fluid that is resistant to increase in acid value at elevated temperatures and a fumed silica gelling agent.

The gel may be made by adding the fumed silica to the organophosphorus fluid small quantities at a time using a conventional mixer and then further mixing the components by means of a colloid mill in which a high sheer rate is produced by a pair of rapidly moving closely spaced plates. The gel structure formed has been found to be reversible by mechanical agitation so that the material can be impregnated into a reticulated foam to uniformly coat the strands thereof and then reverts to a gel in situ.

The foam body may be a reticulated polyether or polyester polyurethane foam, may comprise a plurality of layers of different density or porosity and may be of cylindrical form stiffened with a cylindrical apertured sleeve. It may also comprise a single layer of foam impregnated as described above and in the form of a cylinder or panel where the body comprises a plurality of layers, sheets or layers of the foam may be in contact with each face of the stiffening sleeve and they may be united together through apertures in the sleeve. A flow deflector may be provided as described in British patent Application No.8222402. In the case of a non-cylindrical filter, an apertured stiffening layer may be disposed between layers of foam that are united through the apertures in the apertured layer.

The foam body may be loaded with gel by immersion in a bath or by spraying at ambient temperature or at slightly elevated temperatures and thereafter passed through squeeze rollers to discharge excess gel material. Desirably the amount of gel present in the foam is from 0.01 to 0.15g per cubic centimetre of foam and preferably from 0.03 to 0.11g per cc of foam.

The organophosphorus fluid is preferably an aryl phosphate based fluid or a phosphate ester based fluid having a viscosity at 40°C of about 43 cSt such as PYRELF DR 46 (available from Elf Oil (GB) Ltd). The fused silica is preferably a hydrophilic grade of AEROSIL such as AEROSIL 200 (Degussa). The proportion of fumed silica may be 3-10 parts by weight and preferably 3-7 parts by weight per 100 parts by weight of fluid. We have found that large proportions e.g. more than 8% of silica can give a firm gel with a dry surface, and that as the proportion of fumed silica is reduced below that value, the gel retains thixotroic properties, but has an oily wet surface which is required for effective dust removal.The resulting gel should remain substantially immobilised in the foam at temperatures up to 100°C and preferably up to 110°C.

As a result of experimental tests, an understanding has been gained as to the manner in which a foam filter and a dust collection agent work together to remove dust from an incoming air stream, and these tests both indicate the difference in mode of action between a pleated paper filter and a foam filter and demonstrate the importance of maintaining the dust collection agent as uniformly as possible in position on the foam.

A reticulated foam works differently from paper as a filtering medium because the dust is collected by the foam on the strands at various points through the thickness of the foam body rather than on the surface. A paper filter, because it operates via dust collection on the surface, gets progressively blocked to the passage of air through the pores in the paper. As these pores become closed off from light loading to heavy loading, the pressure drop across the filter increases rapidly. Foam, by contrast, particularly when coated with a wetting agent, collects dust on the strands. Air is still free to pass through the middle of the cells. Even when the element is quite heavily laden with dust, there is still passage for air. Only when the collection of dust begins to bridge across the cell spaces or windows does the passage of air become severely restricted. Naturally, as the hole size in the cells diminishes, there is less free area for air flow. However, the greatest effect on the pressure drop will come as cell windows become progressively blocked and the number of pores available for air passage begins to go down. Thus a rather more gentle rise in pressure drop is to be expected from foam.

As mentioned above, a body of foam is able to collect dust through the thickness direction whereas paper is a surface collector and hence needs a large surface area per filter, i.e. many pleats. Because f[+tration is a bulk rather than a surface phenomenon, if the medium is too aggressive in dust removal, all the dust from the air stream being filtered will be localised at the entry surface of the element, the dust collected will form a barrier to further dust, then the pressure difference across the filter will climb rapidly. As many specifications set a limit to the increase in pressure difference across the filter (rather than time or amount of dust loaded), this building of a barrier to air flow if it happens too quickly, will cause premature termination of the effective filter life. The dust collection or wetting agent affects the three important factors, overall efficiency, pressure difference across the filter, dust holding capacity, but affects them in different ways. The overall efficiency of the filter rises rapidly as the wetting agent increases. This rise may be in a straight line but will probably tend to flatten off at the high end, i.e. proportionately more wetting agent will probably be required to achieve a change from 98 - 99% than is necessary to achieve a change from, say 91 - 92%. The dust holding capacity will rise to a maximum and then is likely to begin to fall off as a barrier gets built up on the side of the filter facing the air stream, and then as penetration becomes more difficult, the dust holding capacity will fall off. This is because the high level of wetting agent is preferentially trapping the dust particles on the inlet side of the filter. The pressure drop will normally rise fairly gently with time in service at lower levels of wetting agent, but at high levels of wetting agent, dust will be retained on a smaller and smaller section of the foam and pores will begin to be closed off as it accumulates. Therefore, the in service pressure drop will rise rapidly. It follows, therefore, that it is harmful to use more wetting agent than necessary. Although the apparent percentage efficiency of filtration may increase, this will be to the detriment of dust holding capacity and pressure drop. As the increase in pressure drop is a limiting factor in filter use, the increase of wetting agent can be self defeating. Sometimes the maximum dust holding capacity may occur where the efficiency may not have reached the minimum required standard (e.g. 97%) and that the above factors will then have to be traded off one against another to give the most favourable combination of properties.

Although the primary intended use of the filters is in the automotive field, the foam filter element of the invention may also be used in heating and ventilation systems.

The invention will now be illustrated by the following Examples:

Example I

The following formulation was applied by spraying to a reticulated polyester polyurethane foam in an amount of about 0.09g per cc of foam:

Aryl phosphate fire-resistant fluid        96%
Aerosil 200                                4%

The formulation produced a stable gel that at elevated temperatures did not flow out of the foam and which imparted fire retardance thereto. The resulting impregnated foam was made up into an automotive air filter.

Example II

An automotive filter of reticulated polyester polyurethane foam was treated with varying quantities of an impregnant which was a mixture of 93% a colourless hydraulic fluid which was propylated phenyl phosphate (degree of propylation 70%) and 7% of Aerosil 200 gelling agent to establish what quantity was the optimum. The impregnated filters were subjected to dust retention tests using a constant flow of dust-contaminated air fed to the filter whilst the pressure drop across the filter was monitored. The dust concentration in the air was constant and so a plot of pressure drop (restriction) against time was equivalent to one of pressure drop against total dust fed. Conventional paper filters suffer from the disadvantage of a rapid rise in pressure drop as dust is fed. Wetted foam collects dust in a different manner and the graphs ideally have a near constant initial section with a much later rise in restriction This reflects a longer practical life for a foam filter and greater dust holding capacity, assuming equal efficiencies. The efficiency of a filter is the percentage of dust which has been retained by the filter at the termination of the test.

Filtration efficiency and dust retention results for the test filter were as follows:

| Impregnant Loading (g) | Filtration Efficiency (%) | Dust Retained After Test (g) |
|---|---|---|
| 30 | 97.2 | 148 |
| 49 | 97.9 | 109 |
| 50 | 97.7 | 93 |
| 69 | 97.8 | 82 |
| 77 | 98.1 | 78 |
| 90 | 98.2 | 78 |

Thus, whilst filtration efficiency rose with impregnant loading, the quantity of dust held by the filter after the test fell and a loading of about 50g was considered to represent the best practical compromise between efficiency and service life. Examination of the filters after the test showed that, with increased loading, the surface facing the dust stream became more and more saturated with dust and the penetration of dust was reduced.

Example III

The following formulation was applied by spraying to a reticulated polyether polyurethane foam:

| | Wt% |
|---|---|
| Fire retardant phosphorous containing hydraulic fluid (Mobil "Pyrogard" 53) | 85% |
| Liquid Chlorinated paraffin fire retardant | 9% |
| Fumed Silica gelling agent (Aerosil 200) | 6% |

The resultant foam material combined good filtration efficiency and good fire-retardant properties.

CLAIMS:

1. A foam filter element comprising a plastics foam body impregnated with a supplementary dust collection agent in the form of a gel that is stable at elevated temperatures, wherein the gel comprises a fire-resistant organophosphorus fluid that is resistant to increase in acid value at elevated temperatures and a fumed silica gelling agent.

2. A foam filter element according to Claim 1, wherein the foam body comprises a plurality of layers of different density or porosity and the foam body is of cylindrical form and is stiffened with a cylindrical apertured sleeve or (b) the foam body is a single layer of foam in the form of a cylinder or panel.

3. A foam filter element according to Claim 2, wherein sheets or layers of foam are in contact with each face of the stiffening sleeve, are united together through the apertures in the sleeve and the filter element is further provided with a flow deflector secured thereto or mounted in spaced relationship thereon.

4. A filter element according to Claim 1 or 2, wherein the foam body is non-cylindrical and is stiffened with an apertured layer arranged between foam layers, the layers being united through the apertures in the apertured layer.

5. A filter element according to any preceding claim, wherein the gel remains substantially immobilised in the foam at temperatures up to 100°C, preferably up to 110°C.

6. A filter element according to any preceding claim, impregnated with from 0.01 to 0.15 grams of gel per cubic centimetre of foam, preferably impregnated with from 0.03 to 0.11 grams.

7. A filter element according to any preceding claim, wherein the foam is a reticulated polyester or polyether polyurethane foam.

8. A filter element according to any preceding claim, wherein there are from 3 to 10 parts by weight of fumed silica per 100 parts by weight of fluid, preferably from 3

0181751

to 7 parts by weight. 9.    A foam filter element according to any preceding claim, wherein the organophosphorus fluid is an aryl phosphate fluid or a phosphate ester fluid and fumed silica is a hydrophilic fused  silica.

10.    A filter element according to any preceding claim wherein the gel has been applied to the foam by immersion in a bath by spraying or by rolling or brush application.

European Patent Office

**EUROPEAN SEARCH REPORT**

0181751

Application number

EP 85 30 7940

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 492 139 (FMC CORP.)<br><br>* Whole document * | 1,5,8,<br>9,10 | B 01 D 39/14<br>B 01 D 46/10<br>F 02 M 35/024 |
| Y | | 1-3 | |
| | --- | | |
| Y | EP-A-0 100 631 (P.G. GUINEA)<br>* Whole document * | 1-3 | |
| | --- | | |
| A | FR-A-1 260 157 (ET. A. GUIOT)<br>* Page 2, left-hand column, lines 7-42 * | 1,7 | |
| | ----- | | |

TECHNICAL FIELDS SEARCHED (Int. Cl.4)

B 01 D
F 02 M

The present search report has been drawn up for all claims

| Place of search | Date of completion of the search | Examiner |
|---|---|---|
| THE HAGUE | 06-02-1986 | PYFFEROEN K. |

EPO Form 1503 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document